# EUROPEAN PATENT APPLICATION

(11) **EP 4 773 428 A1**
(43) Date of publication of application: **08.07.2026**
(21) Application number: 25858706.2
(22) Date of filing: 03.07.2025
(51) Int. Cl.: H01M 50/593

(54) **SECONDARY BATTERY AND ELECTRONIC DEVICE**

(30) Priority: 31.08.2024 CN 202411215745
(71) Applicant: Ningde Amperex Technology Limited, Ningde, Fujian 352100 (CN); Dongguan Amperex Technology Limited, Dongguan City, Guangdong Province 523000 (CN)
(72) Inventor: NING, Yaoyao, Ningde, Fujian 352100 (CN); MA, Junjie, Ningde, Fujian 352100 (CN)
(74) Representative: Kraus & Lederer PartGmbB
(86) International application number: PCT/CN2025/106759
(87) International publication number: WO 2026/045662

(57) **Abstract**

This application discloses a secondary battery and an electronic apparatus. The secondary battery includes a packaging pouch, an electrode assembly, an electrical connection member, a first insulating member, and a second insulating member, where the electrode assembly is located in the packaging pouch, the electrode assembly includes a main body portion and a tab assembly, the tab assembly includes a plurality of tabs, and the electrical connection member is located outside the packaging pouch and is electrically connected to the tab assembly. The tab assembly includes a first portion and a second portion. The first portion protrudes from the main body portion and is connected to the second portion. The second portion is bent toward the main body portion, the second portion forms a weld mark with the electrical connection member, and the second portion includes a first surface and a second surface. The first insulating member covers the weld mark, the second insulating member is located on one side in a thickness direction of the tab, and the second insulating member extends from the first surface of the second portion through the first portion to the main body portion. A thickness of the first insulating member is T₁, a thickness of the second insulating member is T₂, T₁ > T₂, 25 µm ≤ T₁ ≤ 60 µm, and T₂ ≥ 4 µm, balancing the safety performance and drop performance of the secondary battery.

## Description

### TECHNICAL FIELD

This application relates to the field of energy storage technologies, and in particular, to a secondary battery and an electronic apparatus.

### BACKGROUND

With the increasing popularity of secondary batteries in mobile electronic device products and the electric vehicle market, in addition to the ever-increasing demand for battery energy density, the safety performance of secondary batteries has also attracted much attention. Therefore, improving the safety performance of secondary batteries remains a problem that needs to be solved in the industry.

### SUMMARY

In view of this, it is necessary to provide a secondary battery and an electronic apparatus that take into account both the safety performance and the drop performance of the secondary battery.

Some embodiments of this application provide a secondary battery, including a packaging pouch, an electrode assembly, an electrical connection member, a first insulating member, and a second insulating member. The electrode assembly is located in the packaging pouch, the electrode assembly includes a main body portion and a tab assembly extending from the main body portion, and the tab assembly includes a plurality of tabs. One end of the electrical connection member is located outside the packaging pouch, and another end is electrically connected to the tab assembly. The tab assembly includes a first portion and a second portion. The first portion protrudes from the main body portion and is connected to the second portion, the second portion is bent toward the main body portion relative to the first portion, the second portion is welded to the electrical connection member to form a weld mark, and the second portion includes a first surface facing away from the main body portion and a second surface facing toward the main body portion. The first insulating member is provided on the first surface of the second portion and covers the weld mark, the second insulating member is located on one side in a thickness direction of the tab, and the second insulating member extends from the first surface of the second portion through the first portion to the main body portion, where a thickness of the first insulating member is T₁, a thickness of the second insulating member is T₂, T₁ > T₂, 25 µm ≤ T₁ ≤ 60 µm, and T₂ ≥ 4 µm. The first insulating member covers the weld mark, mitigating the risk of short circuit due to the weld mark piercing the packaging pouch. The second insulating member connects the first surface and the main body portion, and the tab and the main body portion are fixed, minimizing positional offset between the tab and the main body portion during handling and use. In addition, this reduces the influence of the thickness of the second insulating member on the flatness of the secondary battery, alleviates the problem of over-pressure at the position of the second insulating member during the formation stage of the secondary battery, and mitigates the problems of purple spots caused by over-pressure at the position of the second insulating member and capacity loss of the secondary battery after cycling.

In one or more optional embodiments above, a thickness of the electrode assembly is T, and 2T₂/T × 100% ≤ 4.1%, which is conducive to reducing the thickness of the second insulating member, reducing the influence of the thickness of the second insulating member on the flatness of the secondary battery, alleviating the problem of over-pressure at the position of the second insulating member during the formation stage of the secondary battery, and mitigating the problems of purple spots caused by over-pressure at the position of the second insulating member and capacity loss of the secondary battery after cycling.

In one or more optional embodiments above, 2T₂/T × 100% ≤ 1.8%, which is further conducive to reducing the thickness of the second insulating member, reducing the influence of the thickness of the second insulating member on the flatness of the secondary battery, alleviating the problem of over-pressure at the position of the second insulating member during the formation stage of the secondary battery, and mitigating the problems of purple spots caused by over-pressure at the position of the second insulating member and capacity loss of the secondary battery after cycling.

In one or more optional embodiments above, 30 µm ≤ T₁ ≤ 50 µm. In this way, the first insulating member can better mitigate the risk of short circuit due to the weld mark piercing the packaging pouch, minimize the space occupied by the first insulating member, and help reduce costs.

In one or more optional embodiments above, the first insulating member and the second insulating member at least partially overlap on the first surface, which is conducive to reducing assembly difficulty and facilitating the bonding of the first insulating member and the second insulating member.

In one or more optional embodiments above, an overlapping region of the second insulating member with the first insulating member at least partially overlaps with the weld mark. The overlapping region is conducive to further mitigating the risk of short circuit due to the weld mark piercing the packaging pouch.

In one or more optional embodiments above, in the overlapping region of the first insulating member and the second insulating member, the second portion, the second insulating member, and the first insulating member are sequentially stacked, preventing the edge of the second insulating member from warping, which is further conducive to fixing the tab and the main body portion, and mitigating the risk of the tab breaking or falling off due to force during handling and use of the secondary battery.

In one or more optional embodiments above, along a stacking direction of the second insulating member and the first insulating member, a projection of the first insulating member is located within the second insulating member. In this way, the risk of short circuit due to the weld mark piercing the packaging pouch can be better mitigated. This is conducive to fixing the tab and the main body portion, and mitigating the risk of the tab breaking or falling off due to force during handling and use of the secondary battery.

In one or more optional embodiments above, an area of the first insulating member is A₁, an overlapping area between the first insulating member and the second insulating member is A, and the secondary battery further satisfies: A ≥ 16.7% A₁. In this way, a tolerance accuracy between the first insulating member and the second insulating member can be better reduced, reducing assembly difficulty, facilitating bonding of the first insulating member and the second insulating member, facilitating assembly, mitigating the risk of edge warping of the second insulating member, and thus mitigating the risk of tab breaking or falling off due to force.

In one or more optional embodiments above, along a width direction of the main body portion of the electrode assembly, a width of the first insulating member is W₁, and a width of the weld mark is W; and along an extending direction of the tab, a length of the first insulating member is L₁, and a length of the weld mark is L. The secondary battery further satisfies: 1.5W ≤ W₁ ≤ 3W, and 1.1L ≤ L₁ ≤ 6.7L, which is conducive to the first insulating member covering the weld mark, mitigating the risk of short circuit due to the weld mark piercing the packaging pouch, and minimizing the space occupied by the first insulating member in the packaging pouch.

In one or more optional embodiments above, 1.8W ≤ W₁ ≤ 2.7W, 1.5L ≤ L₁ ≤ 5.4L, which is conducive to the first insulating member covering the weld mark, mitigating the risk of short circuit due to the weld mark piercing the packaging pouch, and further minimizing the space occupied by the first insulating member in the packaging pouch.

In one or more optional embodiments above, along an extending direction of the second insulating member, an overlapping length of the second insulating member with the main body portion is L₅, an overlapping length of the second insulating member with the tab and the electrical connection member is L₆, 3 mm ≤ L₅ ≤ 8 mm, and 3 mm ≤ L₆ ≤ 13 mm, which is conducive to fixing the main body portion and the tab, mitigating the risk of the tab moving or falling off during movement or use of the secondary battery, minimizing the space occupied by the second insulating member in the packaging pouch, reducing the influence of excessive length of the second insulating member on the heat-sealing adhesion layer, and helping to reduce costs.

In one or more optional embodiments above, the secondary battery further includes an electrolyte sealed in the packaging pouch, and the peel strength between the first insulating member and the weld mark is greater than 0.26 N/mm, which is conducive to the first insulating member adhering to the weld mark so that the first insulating member covers burrs on the weld mark, mitigating the risk of short circuit due to the weld mark piercing the packaging pouch.

In one or more optional embodiments above, the secondary battery further includes the electrolyte sealed in the packaging pouch, and the peel strength between the second insulating member and the tab is greater than 0.08 N/mm, which is conducive to fixing the tab and the main body portion, mitigating the risk of the tab moving or falling off during handling and use.

In one or more optional embodiments above, the secondary battery further includes a third insulating member. The third insulating member is located on a side of the tab facing away from the second insulating member, the third insulating member sequentially passes from the electrical connection member through the second surface of the second portion and the first portion and extends to the main body portion, a thickness of the third insulating member is T₃, and the secondary battery further satisfies: T₁ > T₃. The third insulating member connects the second surface and the main body portion, and the tab and the main body portion are further fixed, minimizing positional offset between the tab and the main body portion during handling and use. The thickness of the third insulating member is smaller than the thickness of the first insulating member, reducing the influence of the thickness of the third insulating member on the flatness of the secondary battery, alleviating the problem of over-pressure at the position of the third insulating member during the formation stage of the secondary battery, and mitigating the problems of purple spots caused by over-pressure at the position of the second insulating member and capacity loss of the secondary battery after cycling.

In one or more optional embodiments above, the thickness of the electrode assembly is T, and the secondary battery further satisfies: 2T₃/T × 100% ≤ 4.1%, which is conducive to reducing the thickness of the third insulating member, reducing the influence of the thickness of the third insulating member on the flatness of the secondary battery, alleviating the problem of over-pressure at the position of the third insulating member during the formation stage of the secondary battery, and mitigating the problems of purple spots caused by over-pressure at the position of the second insulating member and capacity loss of the secondary battery after cycling.

In one or more optional embodiments above, the secondary battery further satisfies: 2T₃/T × 100% ≤ 1.8%, which is further conducive to reducing the thickness of the third insulating member, reducing the influence of the thickness of the third insulating member on the flatness of the secondary battery, alleviating the problem of over-pressure at the position of the third insulating member during the formation stage of the secondary battery, and mitigating the problems of purple spots caused by over-pressure at the position of the second insulating member and capacity loss of the secondary battery after cycling.

In one or more optional embodiments above, along an extending direction of the third insulating member, an overlapping length of the third insulating member with the main body portion is L₇, an overlapping length between the third insulating member and the tab and the electrical connection member together is L₈, 3 mm ≤ L₇ ≤ 8 mm, and 7 mm ≤ L₈ ≤ 13 mm, which is conducive to fixing the main body portion and the tab, mitigating the risk of the tab moving or falling off during movement or use of the secondary battery, minimizing the space occupied by the third insulating member in the packaging pouch, reducing the influence of excessive length of the third insulating member on a heat-sealing adhesion layer, and helping to reduce costs.

In one or more optional embodiments above, the secondary battery further includes the electrolyte sealed in the packaging pouch, and the peel strength between the third insulating member and the tab is greater than 0.08 N/mm, which is conducive to fixing the tab and the main body portion, mitigating the risk of the tab moving or falling off during handling and use.

In one or more optional embodiments above, the first insulating member, the second insulating member, and the third insulating member each include a substrate layer and an adhesive layer, and the adhesive layer is connected to the substrate layer. The substrate layer includes one or a combination of several of polyethylene terephthalate, polyimide, polyester film, polyethylene film, non-woven fabric, and foam. The adhesive layer includes one or a combination of several of an acrylic system, a rubber system, styrene-isoprene-styrene, isooctyl acrylate, octyl methacrylate, isooctyl methacrylate, isoprene, styrene, butyl acrylate, polyacrylic acid, polyacrylate salt, polyacrylonitrile, polyvinylpyrrolidone, polyvinyl acetate, and polymethyl methacrylate.

Some embodiments of this application provide an electronic apparatus, including the secondary battery according to any one of the above embodiments.

### BRIEF DESCRIPTION OF DRAWINGS

FIG. 1 shows a schematic structural diagram of a secondary battery in some embodiments of this application.
FIG. 2 shows a schematic structural diagram of a portion of a secondary battery in some embodiments of this application.
FIG. 3 shows a schematic cross-sectional view of a packaging pouch in some embodiments of this application.
FIG. 4 shows a schematic structural diagram of a portion of a secondary battery in some other embodiments of this application.
FIG. 5 shows a schematic structural diagram of a portion of a secondary battery in still some other embodiments of this application.
FIG. 6 shows a simplified schematic structural diagram of the secondary battery in FIG. 4 of this application viewed along a second direction.
FIG. 7 shows a schematic structural diagram of an electronic apparatus in some embodiments of this application.

Reference signs of main components:

| | |
|---|---|
| Secondary battery | 100 |
| Weld mark | 101 |
| Packaging pouch | 10 |
| Protective layer | 10a |
| Metal layer | 10b |
| Adhesion layer | 10c |
| Electrode assembly | 20 |
| Main body portion | 21 |
| Tab assembly | 22 |
| Connection section | 22a |
| First portion | 221 |
| Second portion | 222 |
| First surface | 222a |
| Second surface | 222b |
| Electrical connection member | 30 |
| First insulating member | 40 |
| Second insulating member | 50 |
| First section | 51 |
| Second section | 52 |
| Third insulating member | 60 |
| Third section | 61 |
| Fourth section | 62 |
| Electronic apparatus | 200 |
| First direction | X |
| Second direction | Y |
| Third direction | Z |

This application is further described with reference to the accompanying drawings in the following specific embodiments.

### DETAILED DESCRIPTION

The following specific embodiments are exemplary and not restrictive, aiming to provide a basic understanding of this application but not to confirm critical or decisive elements of this application and not to limit the scope of protection. As long as there is no structural conflict, the various technical features mentioned in various embodiments can be combined in any manner.

When one component is assumed as being "disposed at/on/in" another component, the component may be provided directly at/on/in the another component or with a component possibly present therebetween. When one component is assumed as being "connected to" another component, it may be connected to the another component directly or with a component possibly present therebetween.

The term "perpendicular" is used to describe an ideal state between two parts. During actual production or use, an approximately perpendicular or equal state may be present between the two components. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

The term "parallel" is used for describing an ideal state of two components. During actual production or use, an approximately parallel or equal state may be present between the two components. For example, with reference to the description of numerical values, "parallel" may indicate that an included angle between two straight lines is within a range of 0° ± 10°, "parallel" may alternatively indicate that a dihedral angle of two planes is within a range of 0° ± 10°, and "parallel" may further alternatively indicate that an included angle between a straight line and a plane is within a range of 0° ± 10°. Two components described as "parallel" to each other may not be absolutely straight lines or planes, and may be approximately straight lines or planes. From a macro perspective, a component can be considered as a "straight line" or "plane" as long as the overall extension direction is a straight line or a plane.

The following describes in detail some embodiments of this application with reference to the accompanying drawings. In absence of conflicts, the following embodiments and features in some embodiments may be combined with each other.

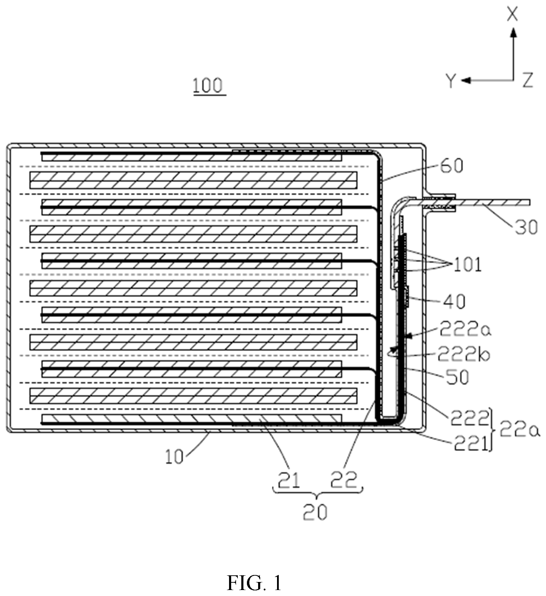

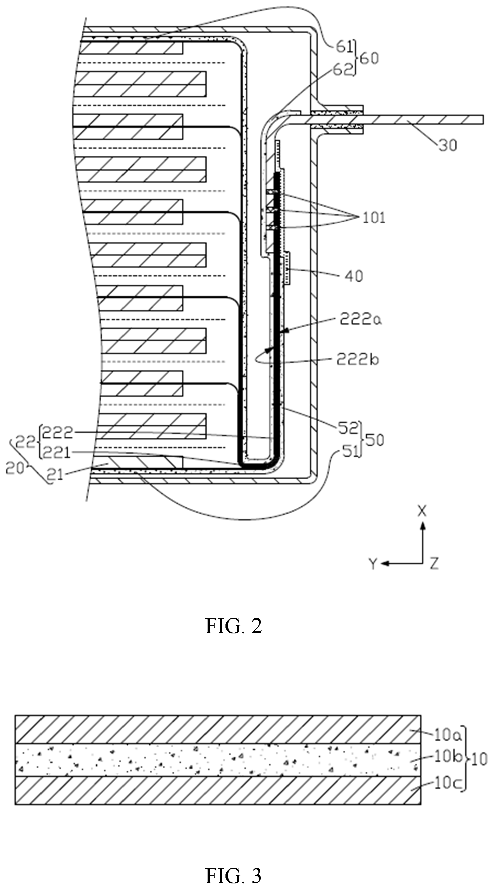

Referring to FIGs. 1 and 2, an embodiment of this application provides a secondary battery 100, including a packaging pouch 10 and an electrode assembly 20, where the electrode assembly 20 is located in the packaging pouch 10. The electrode assembly 20 includes a main body portion 21 and a tab assembly 22 extending from the main body portion 21. The tab assembly 22 includes a plurality of tabs.

In some embodiments, the secondary battery 100 includes an electrical connection member 30, one end of the electrical connection member 30 is located outside the packaging pouch 10, and another end is electrically connected to the tab assembly 22.

In some embodiments, the tab assembly 22 includes a connection section 22a, and the connection section 22a is formed by gathering and connecting the plurality of tabs in the tab assembly 22.

In some embodiments, the connection section 22a includes a first portion 221 and a second portion 222. The first portion 221 protrudes from the main body portion 21, and the first portion 221 is connected to the second portion 222.

In some embodiments, the second portion 222 is bent toward the main body portion 21 relative to the first portion 221, the second portion 222 includes a first surface 222a facing away from the main body portion 21 and a second surface 222b facing toward the main body portion 21, and the second portion 222 is welded to the electrical connection member 30 to form a weld mark 101.

In some embodiments, the secondary battery 100 includes a first insulating member 40. The first insulating member 40 is provided on the first surface 222a and covers the weld mark 101.

In some embodiments, the secondary battery 100 includes a second insulating member 50. The second insulating member 50 is located on one side in a thickness direction of the tab assembly 22, and the second insulating member 50 extends from the first surface 222a through the first portion 221 to the main body portion 21.

In some embodiments, a thickness of the first insulating member 40 is T₁, a thickness of the second insulating member 50 is T₂, and T₁ > T₂.

In some embodiments, 25 µm ≤ T₁ ≤ 60 µm, which is conducive to the first insulating member 40 mitigating the risk of short circuit due to the weld mark 101 piercing the packaging pouch 10, minimizing the space occupied by the first insulating member 40, and helping to reduce costs.

Optionally, T₁ may be any one or a range defined by any two of 25 µm, 26 µm, 27 µm, 28 µm, 29 µm, 30 µm, 31 µm, 32 µm, 33 µm, 34 µm, 35 µm, 36 µm, 37 µm, 38 µm, 39 µm, 40 µm, 41 µm, 42 µm, 43 µm, 44 µm, 45 µm, 46 µm, 47 µm, 48 µm, 49 µm, 50 µm, 51 µm, 52 µm, 53 µm, 54 µm, 55 µm, 56 µm, 57 µm, 58 µm, 59 µm, and 60 µm.

In some embodiments, T₂ ≥ 4 µm, which is conducive to reducing the occurrence of tearing and failing to provide restraint due to the second insulating member 50 being too thin.

In this application, the thickness of the second insulating member 50 is smaller than the thickness of the first insulating member 40, the first insulating member 40 covers the weld mark 101, mitigating the risk of short circuit due to the weld mark 101 piercing the packaging pouch 10. The second insulating member 50 connects the first surface 222a and the main body portion 21, and the tab assembly 22 and the main body portion 21 are fixed, minimizing positional offset between the tab assembly 22 and the main body portion 21 during handling and use. In addition, this reduces the influence of the thickness of the second insulating member 50 on the flatness of the secondary battery 100, alleviates the problem of over-pressure at the position of the second insulating member 50 during the formation stage of the secondary battery 100, and mitigates the problems of purple spots caused by over-pressure at the position of the second insulating member 50 and capacity loss of the secondary battery 100 after cycling.

In some embodiments, 30 µm ≤ T₁ ≤ 50 µm. In this way, the first insulating member 40 can better mitigate the risk of short circuit due to the weld mark 101 piercing the packaging pouch 10, minimize the space occupied by the first insulating member 40, and help reduce costs.

Referring to FIG. 3, in some embodiments, the packaging pouch 10 includes a protective layer 10a, a metal layer 10b, and an adhesion layer 10c. The metal layer 10b is located between the protective layer 10a and the adhesion layer 10c. The protective layer 10a is located on an outermost side of the packaging pouch 10, and the adhesion layer 10c is located on an innermost side of the packaging pouch 10 for sealing the packaging pouch 10. The second insulating member 50 covers the weld mark 101, mitigating the risk of short circuit in the secondary battery 100 due to the weld mark 101 piercing the adhesion layer 10c and contacting the metal layer 10b.

In some embodiments, the packaging pouch 10 is a packaging pouch obtained by using a package film (such as an aluminum-plastic film) for packaging, that is, the secondary battery 100 is a pouch battery.

In some embodiments, a first electrode plate and a second electrode plate having different polarities and a separator provided between the first electrode plate and the second electrode plate are included.

In some embodiments, the electrode assembly 20 is a wound structure.

In some embodiments, the electrode assembly 20 is a laminated structure. When the electrode assembly 20 is a laminated structure, this application also mitigates the problem of the edge of the separator being warped due to stress concentration during the lamination process resulting from uneven flatness of the secondary battery 100 with the laminated structure.

In some embodiments, a thickness direction of the electrode assembly 20 is defined as a first direction X, along the first direction X, the thickness of the electrode assembly 20 is T, and 2T₂/T × 100% ≤ 4.1%, which is conducive to reducing the thickness of the second insulating member 50, reducing the influence of the thickness of the second insulating member 50 on the flatness of the secondary battery 100, alleviating the problem of over-pressure at the position of the second insulating member 50 during the formation stage of the secondary battery 100, and mitigating the problems of purple spots caused by over-pressure at the position of the second insulating member 50 and capacity loss of the secondary battery 100 after cycling.

In some embodiments, 2T₂/T × 100% ≤ 1.8%, which is further conducive to reducing the thickness of the second insulating member 50, reducing the influence of the thickness of the second insulating member 50 on the flatness of the secondary battery 100, alleviating the problem of over-pressure at the position of the second insulating member 50 during the formation stage of the secondary battery 100, and mitigating the problems of purple spots caused by over-pressure at the position of the second insulating member 50 and capacity loss of the secondary battery 100 after cycling.

Referring to FIG. 2, in some embodiments, the first insulating member 40 and the second insulating member 50 at least partially overlap on the first surface 222a, which is conducive to reducing assembly difficulty and facilitating the bonding of the first insulating member 40 and the second insulating member 50.

In some embodiments, along a stacking direction of the second insulating member 50 and the first insulating member 40, the second insulating member 50 is located on a side of the first insulating member 40 facing toward the tab assembly 22, which is conducive to mitigating the risk of edge warping of the second insulating member 50 and mitigating the risk of the tab assembly 22 breaking or falling off due to force during handling and use of the secondary battery 100.

In some embodiments, an area of the first insulating member 40 is A₁, an overlapping area between the first insulating member 40 and the second insulating member 50 is A, and A ≥ 16.7% A₁. In this way, a tolerance accuracy between the first insulating member 40 and the second insulating member 50 can be better reduced, reducing assembly difficulty, facilitating bonding of the first insulating member 40 and the second insulating member 50, facilitating assembly, mitigating the risk of the edge warping of the second insulating member 50, and mitigating the risk of tab assembly 22 breaking or falling off due to force.

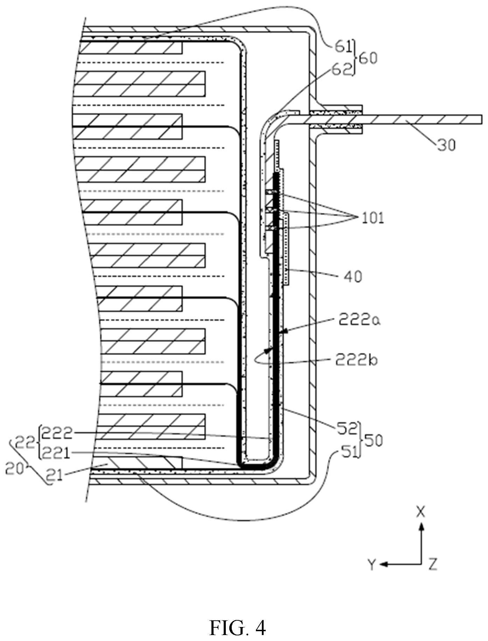

Referring to FIG. 4, in some embodiments, an overlapping region of the second insulating member 50 with the first insulating member 40 at least partially overlaps with the weld mark 101. The overlapping region is conducive to further reducing the risk of short circuit due to the weld mark 101 piercing the packaging pouch 10.

In some embodiments, in the overlapping region of the second insulating member 50 and the first insulating member 40, the second portion 222, the second insulating member 50, and the first insulating member 40 are sequentially stacked, preventing the edge of the second insulating member 50 from warping, which is further conducive to fixing the tab assembly 22 and the main body portion 21, and mitigating the risk of a tab 33 breaking or falling off due to force during handling and use of the secondary battery 100.

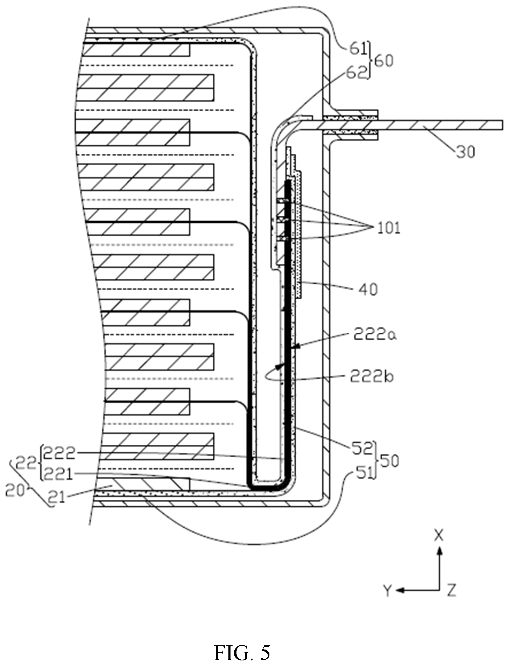

Referring to FIG. 5, in some embodiments, along a stacking direction of the second insulating member 50 and the first insulating member 40, a projection of the first insulating member 40 is located within the second insulating member 50. In this way, the risk of short circuit due to the weld mark 101 piercing the packaging pouch 10 can be better mitigated. This is conducive to fixing the tab assembly 22 and the main body portion 21, and mitigating the risk of the tab assembly 22 breaking or falling off due to force during handling and use of the secondary battery 100.

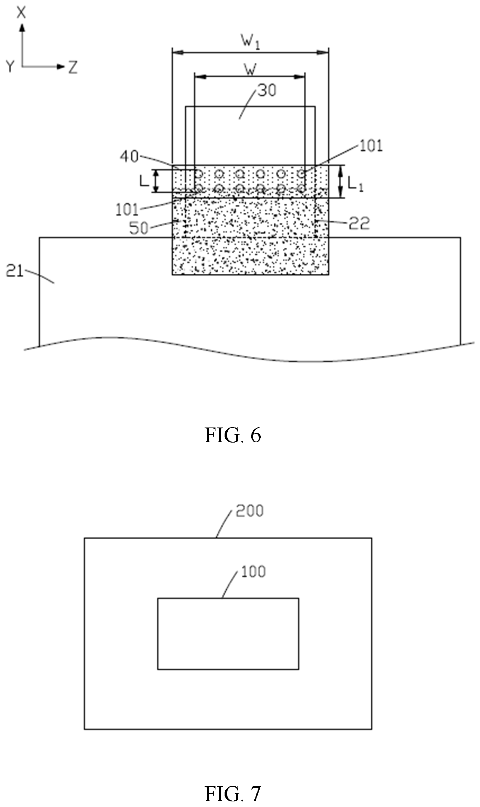

Referring to FIG. 6, a length direction of the second portion 222 is defined as a second direction Y, and a width direction of the main body portion 21 is defined as a third direction Z, where the first direction X, the second direction Y, and the third direction Z are perpendicular to each other.

In some embodiments, along the third direction Z, a width of the first insulating member 40 is W₁, a width of the weld mark 101 is W, and 1.5W ≤ W₁ ≤ 3W. This is conducive to the first insulating member 40 covering the weld mark 101, mitigating the risk of short circuit due to the weld mark 101 piercing the packaging pouch 10, and minimizing the space occupied by the first insulating member 40 in the packaging pouch 10. The width of the weld mark 101 refers to the maximum distance between the two outermost weld marks 101 in the third direction Z.

Optionally, W₁ may be any one or a range defined by any two of 1.5W, 1.6W, 1.7W, 1.8W, 1.9W, 2.0W, 2.1W, 2.2W, 2.3W, 2.4W, 2.5W, 2.6W, 2.7W, 2.8W, 2.9W, and 3.0W.

In some embodiments, 1.8W ≤ W₁ ≤ 2.7W. This is conducive to the first insulating member 40 covering the weld mark 101, mitigating the risk of short circuit due to the weld mark 101 piercing the packaging pouch 10, and further minimizing the space occupied by the first insulating member 40 in the packaging pouch 10.

In some embodiments, along an extending direction of the tab assembly 22, a length of the first insulating member 40 is L₁, a length of the weld mark 101 is L, and 1.1L ≤ L₁ ≤ 6.7L. This is conducive to the first insulating member 40 covering the weld mark 101, mitigating the risk of short circuit due to the weld mark 101 piercing the packaging pouch 10, and minimizing the space occupied by the first insulating member 40 in the packaging pouch 10. The extending direction of the tab assembly 22 is substantially parallel to the first direction X, and the length of the weld mark 101 refers to the maximum distance between the two outermost weld marks 101 in the first direction X.

Optionally, L₁ may be any one or a range defined by any two of 1.5L, 1.6L, 1.7L, 1.8L, 1.9L, 2.0L, 2.1L, 2.2L, 2.3L, 2.4L, 2.5L, 2.6L, 2.7L, 2.8L, 2.9L, 3.0L, 3.1L, 3.2L, 3.3L, 3.4L, 3.5L, 3.6L, 3.7L, 3.8L, 3.9L, 4.0L, 4.1L, 4.2L, 4.3L, 4.4L, 4.5L, 4.6L, 4.7L, 4.8L, 4.9L, 5.0L, 5.1L, 5.2L, 5.3L, 5.4L, 5.5L, 5.6L, 5.7L, 5.8L, 5.9L, 6.0L, 6.1L, 6.2L, 6.3L, 6.4L, 6.5L, 6.6L, and 6.7L.

In some embodiments, 1.5L ≤ L₁ ≤ 5.4L. This is conducive to the first insulating member 40 covering the weld mark 101, mitigating the risk of short circuit due to the weld mark 101 piercing the packaging pouch 10, and further minimizing the space occupied by the first insulating member 40 in the packaging pouch 10.

Referring to FIG. 2, in some embodiments, along an extending direction of the second insulating member 50, an overlapping length of the second insulating member 50 with the main body portion 21 is L₅, and 3 mm ≤ L₅ ≤ 8 mm. An overlapping length of the second insulating member 50 with the tab assembly 22 and the electrical connection member 30 is L₆, 3 mm ≤ L₅ ≤ 8 mm, and 3 mm ≤ L₆ ≤ 13 mm, which is conducive to fixing the main body portion 21 and the tab assembly 22, mitigating the risk of the tab assembly 22 breaking or falling off due to force during movement or use of the secondary battery 100, minimizing the space occupied by the second insulating member 50 in the packaging pouch 10, reducing the influence of excessive length of the second insulating member 50 on the heat-sealing adhesion layer 10c, and helping to reduce costs.

The overlapping length of the second insulating member 50 with the main body portion 21 refers to a length of adhesion of the second insulating member 50 to the main body portion 21, and the overlapping length of the second insulating member 50 with the tab assembly 22 and the electrical connection member 30 refers to a length of adhesion of the second insulating member 50 to the tab assembly 22 and the electrical connection member 30.

Optionally, L₅ may be any one or a range defined by any two of 3 mm, 4 mm, 5 mm, 6 mm, 7 mm, and 8 mm.

Optionally, L₆ may be any one or a range defined by any two of 3 mm, 4 mm, 5 mm, 6 mm, 7 mm, 8 mm, 9 mm, 10 mm, 11 mm, 12 mm, and 13 mm. In some embodiments, the length of the second insulating member 50 is the sum of the lengths of L₅ and L₆.

In some embodiments, the second insulating member 50 includes a first section 51, where the first section 51 is bonded to the main body portion 21. A length of the first section 51 is L₅.

In some embodiments, the second insulating member 50 includes a second section 52 connected to the first section 51, where the second section 52 is bonded to the tab assembly 22 and the electrical connection member 30. A length of the second section 52 is L₆.

In some embodiments, the secondary battery 100 includes an electrolyte sealed in the packaging pouch 10, and the electrode assembly 20 and the first insulating member 40 are immersed in the electrolyte.

Referring to FIGs. 2 and 4, in some embodiments, when the first insulating member 40 is not in contact with the electrolyte, the peel strength between the first insulating member 40 and the weld mark 101 is greater than 0.3 N/mm, which is conducive to the first insulating member 40 bonding to the weld mark 101, so that the first insulating member 40 covers burrs on the weld mark 101, mitigating the risk of short circuit due to the weld mark 101 piercing the packaging pouch 10.

In some embodiments, after immersion in the electrolyte, the peel strength between the first insulating member 40 and the weld mark 101 is greater than 0.26 N/mm, which is further conducive to the first insulating member 40 bonding to the weld mark 101, so that the first insulating member 40 covers burrs on the weld mark 101, mitigating the risk of short circuit due to the weld mark 101 piercing the packaging pouch 10.

Referring to FIG. 6, in some embodiments, when the first insulating member 40 and the second insulating member 50 are not in contact with the electrolyte, the peel strength between the first insulating member 40 and the second insulating member 50 is greater than 0.3 N/mm.

In some embodiments, after immersion in the electrolyte at 85°C for 4 h, the peel strength between the first insulating member 40 and the second insulating member 50 is greater than 0.26 N/mm.

In some embodiments, the second insulating member 50 is immersed in the electrolyte.

In some embodiments, when the second insulating member 50 is not in contact with the electrolyte, the peel strength between the second insulating member 50 and the tab assembly 22 is greater than 0.1 N/mm, which is conducive to fixing the tab assembly 22 and the main body portion 21, and minimizing positional offset between the tab assembly 22 and the main body portion 21 during handling and use.

In some embodiments, after immersion in the electrolyte, the peel strength between the second insulating member 50 and the tab assembly 22 is greater than 0.08 N/mm, which is further conducive to fixing the tab assembly 22 and the main body portion 21, and minimizing positional offset between the tab assembly 22 and the main body portion 21 during handling and use.

Referring to FIGs. 2, 4, and 6, the secondary battery 100 includes a third insulating member 60. The third insulating member 60 is located on a side of the tab assembly 22 facing away from the second insulating member 50, the third insulating member 60 sequentially passes from the electrical connection member 30 through the second surface 222b of the second portion 222 and the first portion 221 and extends to the main body portion 21, a thickness of the third insulating member 60 is T₃, and T₁ > T₃. The third insulating member 60 connects the second surface 222b and the main body portion 21, and the tab assembly 22 and the main body portion 21 are further fixed, minimizing positional offset between the tab assembly 22 and the main body portion 21 during handling and use. The thickness of the third insulating member 60 is smaller than the thickness of the first insulating member 40, reducing the influence of the thickness of the third insulating member 60 on the flatness of the secondary battery 100, alleviating the problem of over-pressure at the position of the third insulating member 60 during the formation stage of the secondary battery 100, and mitigating the problems of purple spots caused by over-pressure at the position of the third insulating member 60 and capacity loss of the secondary battery 100 after cycling.

In some embodiments, T₃ ≥ 4 µm, which is conducive to reducing the occurrence of tearing and failing to provide restraint due to the third insulating member 60 being too thin.

In some embodiments, along the first direction X, a thickness of the electrode assembly 20 is T, 2T₃/T × 100% ≤ 4.1%, which is conducive to reducing the thickness of the third insulating member 60, reducing the influence of the thickness of the third insulating member 60 on the flatness of the secondary battery 100, alleviating the problem of over-pressure at the position of the third insulating member 60 during the formation stage of the secondary battery 100, and mitigating the problems of purple spots caused by over-pressure at the position of the third insulating member 60 and capacity loss of the secondary battery 100 after cycling.

In some embodiments, 2T₃/T × 100% ≤ 1.8%, which is further conducive to reducing the thickness of the third insulating member 60, reducing the influence of the thickness of the third insulating member 60 on the flatness of the secondary battery 100, alleviating the problem of over-pressure at the position of the third insulating member 60 during the formation stage of the secondary battery 100, and mitigating the problems of purple spots caused by over-pressure at the position of the third insulating member 60 and capacity loss of the secondary battery 100 after cycling.

Referring to FIG. 2, along an extending direction of the third insulating member 60, an overlapping length of the third insulating member 60 with the main body portion 21 is L₇, an overlapping length between the third insulating member 60 and the tab assembly 22 and the electrical connection member 30 together is L₈, 3 mm ≤ L₇ ≤ 8 mm and 3 mm ≤ L₈ ≤ 13 mm, which is conducive to fixing the main body portion 21 and the tab assembly 22, mitigating the risk of the tab assembly 22 breaking or falling off due to force during movement or use of the secondary battery 100, minimizing the space occupied by the third insulating member 60 in the packaging pouch 10, reducing the influence of excessive length of the third insulating member 60 on the heat-sealing adhesion layer 10c, and helping to reduce costs.

The overlapping length of the third insulating member 60 with the main body portion 21 refers to a length of adhesion of the third insulating member 60 to the main body portion 21, and the overlapping length of the third insulating member 60 with the tab assembly 22 and the electrical connection member 30 refers to a length of adhesion of the third insulating member 60 to the tab assembly 22 and the electrical connection member 30.

Optionally, L₇ may be any one or a range defined by any two of 3 mm, 4 mm, 5 mm, 6 mm, 7 mm, and 8 mm.

Optionally, L₈ may be any one or a range defined by any two of 3 mm, 4 mm, 5 mm, 6 mm, 7 mm, 8 mm, 9 mm, 10 mm, 11 mm, 12 mm, and 13 mm.

In some embodiments, the length of the third insulating member 60 is the sum of the lengths of L₇ and L₈.

In some embodiments, the third insulating member 60 includes a third section 61, where the third section 61 is bonded to the main body portion 21. A length of the third section 61 is L₇.

In some embodiments, the third insulating member 60 includes a fourth section 62 connected to the third section 61, where the fourth section 62 is bonded to the tab assembly 22 and the electrical connection member 30. A length of the fourth section 62 is L₈.

In some embodiments, the third insulating member 60 is immersed in the electrolyte.

In some embodiments, when the third insulating member 60 is not in contact with the electrolyte, the peel strength between the third insulating member 60 and the tab assembly 22 is greater than 0.1 N/mm, which is conducive to fixing the tab assembly 22 and the main body portion 21, minimizing positional offset between the tab assembly 22 and the main body portion 21 during handling and use.

In some embodiments, after immersion in the electrolyte, the peel strength between the third insulating member 60 and the tab assembly 22 is greater than 0.08 N/mm, which is further conducive to fixing the tab assembly 22 and the main body portion 21, minimizing positional offset between the tab assembly 22 and the main body portion 21 during handling and use.

In some embodiments, the first insulating member 40 includes a first substrate layer and a first adhesive layer connected to the first substrate layer.

In some embodiments, the material of the first substrate layer includes one or a combination of several of polyethylene terephthalate, polyimide, polyester film, polyethylene film, non-woven fabric, and foam.

In some embodiments, the material of the first adhesive layer includes one or a combination of several of a rubber system, styrene-isoprene-styrene, polypropylene, isoprene or styrene, polyacrylic acid, polyacrylate salt, polyacrylonitrile, and polyvinylpyrrolidone.

In some embodiments, the second insulating member 50 includes a second substrate layer and a second adhesive layer connected to the second substrate layer.

In some embodiments, the material of the second substrate layer includes one or a combination of several of polyethylene terephthalate, polyimide, polyester film, polyethylene film, non-woven fabric, and foam.

In some embodiments, the material of the second adhesive layer includes one or a combination of several of an acrylic system, a rubber system, styrene-isoprene-styrene, isooctyl acrylate, octyl methacrylate, isooctyl methacrylate, isoprene, styrene, butyl acrylate, polyacrylic acid, polyacrylate salt, polyacrylonitrile, polyvinylpyrrolidone, polyvinyl acetate, and polymethyl methacrylate.

In some embodiments, the third insulating member 60 includes a third substrate layer and a third adhesive layer connected to the third substrate layer.

In some embodiments, the material of the third substrate layer includes one or a combination of several of polyethylene terephthalate, polyimide, polyester film, polyethylene film, non-woven fabric, and foam.

In some embodiments, the material of the third adhesive layer includes one or a combination of several of an acrylic system, a rubber system, styrene-isoprene-styrene, isooctyl acrylate, octyl methacrylate, isooctyl methacrylate, isoprene, styrene, butyl acrylate, polyacrylic acid, polyacrylate salt, polyacrylonitrile, polyvinylpyrrolidone, polyvinyl acetate, and polymethyl methacrylate.

In some embodiments, the peel strength test is conducted using a Gotech tensile machine according to GB/T2792-2014 "Measurement of Peel Adhesion Properties for Adhesive Tape". The test process is as follows: The secondary battery is discharged to 0 V, then the secondary battery is disassembled. The first insulating member 40, the tab assembly 22, and the weld mark 101 are taken out as a whole, and the surface electrolyte is wiped with dust-free paper. Then the resulting sample is cut into strips of 5 mm × 10 mm. Along a length direction of the sample, the surface of the electrical connection member 30 facing away from the first insulating member 40 in the sample is adhered to a steel plate with double-sided tape (Nitto 5000NS), where the adhesion length is not less than 3 mm. The steel plate is fixed at the corresponding position of the Gotech tensile machine, the sample is pulled up, the first insulating member 40 is put into a chuck and clamped, where the pulled first insulating member 40 and the steel plate form a spatial angle of 180°. The chuck pulls the sample at a speed of 50 mm/min 5 ± 0.2 mm/s, and an average tensile force in the stable region is finally measured and recorded as the peel strength between the first insulating member 40 and the weld mark 101, in units of N/mm.

It can be understood that when testing the peel strength between the second insulating member 50 and the tab assembly 22, the second insulating member 50 is put into the chuck and then clamped and tested according to the above test method.

It can be understood that when testing the peel strength between the third insulating member 60 and the tab assembly 22, the third insulating member 60 and the tab assembly 22 are taken out as a whole, the third insulating member 60 is put into the chuck and then clamped and tested according to the above test method.

The following further describes this application with reference to specific examples.

### 1. Cycling test:

Test for cycling capacity retention rate: A lithium-ion battery was placed in a 25°C environment and left standing for 30 minutes, and then charged and discharged according to the following steps: the lithium-ion battery was charged to 4.25 V at a constant current of 1.5C, then charged to 4.5 V at a constant current of 1.2C, then charged to 4.53 V at a constant current of 0.8C, then charged at a constant voltage to 0.14C, left standing for 5 minutes, discharged to 3 V at a constant current of 1C, and left standing for 5 minutes. This was a cycle, and an initial discharge capacity C₀ of the lithium-ion battery was recorded. The lithium-ion battery was cycled 500 times according to the above cycle steps, and a discharge capacity C₁ of the lithium-ion battery after 500 cycles was measured. During the cycling test, the lithium-ion battery was observed for any phenomena such as smoking, fire, or explosion. Capacity retention rate = C₁/C₀ × 100%.

Test for purple spot/lithium precipitation area: after 500 cycles, the lithium-ion battery was disassembled, an area near an adhesive tape of the negative electrode plate was observed for the purple spot and lithium precipitation state, where the non-lithium-precipitated region on a surface of the negative electrode plate was golden yellow, the purple spot region was dark purple, and the lithium precipitation region was gray-white. The percentage of purple spot/lithium precipitation area was calculated based on a total area of the negative electrode material layer on one side, and the judgment criteria for the purple spot/lithium precipitation state on the surface of the negative electrode plate were as follows: when the purple spot/lithium precipitation area was less than or equal to 1%, it was considered to have no purple spot or no lithium precipitation; when the purple spot/lithium precipitation area was less than or equal to 3%, it was considered to have slight purple spot/lithium precipitation; when the purple spot/lithium precipitation area was between 3% and 5%, it was considered to have moderate purple spot/lithium precipitation; and when the purple spot/lithium precipitation area was greater than 5%, it was considered to have severe purple spot/lithium precipitation.

2. Drop test method: the lithium-ion battery was placed in a 25°C environment and left standing for 30 minutes, and then charged according to the following steps: The lithium-ion battery was charged to 4.53 V at a constant current of 0.5C, then charged at a constant voltage to 0.05C, left standing for 60 min, and the voltage of the lithium-ion battery before the drop test was tested. The lithium-ion battery was put into a fixture and dropped from a height of 1.5 m above the ground using a drop device in the following sequence: head-tail-head right corner-tail right corner-head left corner-tail left corner (angle: 45 ± 15°), repeated for 6 rounds. After dropping, the lithium-ion battery was left standing at room temperature for 24 h, the voltage of the lithium-ion battery was measured and recorded, and the appearance of the lithium-ion battery was checked and photographed before and after the test. The criteria for passing the drop test were: a voltage drop of less than 30 mV, the lithium-ion battery was disassembled to observe whether the tab was damaged or torn, if the tabs were undamaged, the test was considered passed; otherwise, it was considered a failure (20 lithium-ion batteries were tested, the number of lithium-ion batteries that failed the test was X, and the test failure rate was X/20).

In some embodiments, a secondary battery 100 with 50% SOC had an initial thickness of 2.43 mm, a length of 110 mm, and a width of 47.6 mm. The assembly process was as follows:
(1) Preparation of negative electrode plate: Negative electrode active material artificial graphite, conductive carbon black (Super P), and styrene-butadiene rubber (SBR) were mixed at a mass ratio of 96:1.5:2.5, then deionized water was added as solvent to obtain a slurry with a weight percentage of 50wt%, and the slurry was stirred to uniformity. A foam adhesive was pre-applied to part of a surface of a negative electrode current collector copper foil with a thickness of 6 µm, then the slurry was uniformly applied on one surface of the copper foil, the foam adhesive was heated for removal so that part of the surface of the copper foil was exposed, and then dried at 110°C to obtain a negative electrode plate coated with a negative electrode active material layer on one surface. When a double-sided coated negative electrode plate was prepared, the above steps were repeated on the other surface of the negative electrode plate to obtain a negative electrode plate coated with a negative electrode active material layer on two surfaces. Then the coated plate was cold-pressed to a thickness of 105 µm, and an uncoated region of an edge of the negative electrode plate was die-cut to form a negative electrode tab, resulting in a negative electrode tab assembly.
(2) Preparation of positive electrode plate: Positive electrode active material lithium cobalt oxide (LiCoO₂), conductive carbon black (Super P), and polyvinylidene fluoride (PVDF) were mixed at a mass ratio of 97.5:1.0:1.5, then N-methylpyrrolidone (NMP) was added as solvent to obtain a slurry with a solid content of 75wt%, and the slurry was stirred to uniformity. The slurry was uniformly applied on one surface of an aluminum foil, and dried at 90°C to obtain a positive electrode plate coated with positive electrode active material on one surface. When a double-sided coated positive electrode plate was prepared, the above coating steps were repeated on the other surface of the aluminum foil. Then the coated plate was cold-pressed to a thickness of 95 µm, and an uncoated region of an edge of the positive electrode plate was die-cut to form a positive electrode tab, resulting in a positive electrode tab assembly.
(3) Preparation of electrolyte: in a dry argon atmosphere, ethylene carbonate (EC), ethyl methyl carbonate (EMC), and diethyl carbonate (DEC) were mixed at a mass ratio of EC:EMC:DEC = 30:50:20 to form a basic organic solvent, and then a lithium salt lithium hexafluorophosphate (LiPF₆) was dissolved in the basic organic solvent and mixed to uniformity to obtain an electrolyte with a lithium salt concentration of 1.15 mol/L.
(4) Preparation of separator: A 7-micron polyethylene porous polymer film was used as a separator.
(5) Preparation of electrode assembly 20: the positive electrode plate, the separator, and the negative electrode plate were stacked, a plurality of tabs were gathered to form a tab assembly and welded to the electrical connection member, and the second insulating member 50, the first insulating member 40, and the third insulating member 60 were bonded.
(6) Assembly of electrode assembly 20: The recess-punched aluminum-plastic film was placed in an assembly fixture with the recess facing upward, the electrode assembly was placed in the pit, and external force was applied to press tightly. Then another recess-punched aluminum-plastic film with the recess facing downward was covered on the electrode assembly, and the periphery of the two aluminum-plastic films were heat-sealed by hot pressing, to obtain an assembled electrode assembly.
(7) Liquid injection and packaging: The assembled electrode assembly was injected with an electrolyte, followed by processes such as vacuum packaging, standing, hot pressing formation, and shaping, to obtain the secondary battery.

It should be noted that except for the parameters listed in the table, all other parameters of Comparative Examples 1-1 to 1-12 were the same as those of Example 1-1.

**Table 1 (Except for the parameters listed in Table 1, all other parameters of Examples 1-2 to 1-15 are the same as those of Example 1-1.)**

| | T₁ (µm) | T₂ (µm) | T (mm) | 2T₂/T (%) | Cycling capacity retention rate | Purple spot/lithium precipitation area at position of second insulating member 50 | Pass rate of drop test |
|---|---|---|---|---|---|---|---|
| Comparative Example 1-1 | 40 | 3 | 2.43 | 0.25% | 96% | 0% | 3/20 |
| Comparative Example 1-2 | 24 | 24 | 2.43 | 1.98% | 76% | 1% | 20/20 |
| Comparative Example 1-3 | 24 | 40 | 2.43 | 3.29% | 73% | 2% | 20/20 |
| Comparative Example 1-4 | 61 | 61 | 2.43 | 5.02% | 87% | 6% | 20/20 |
| Comparative Example 1-5 | 61 | 65 | 2.43 | 5.35% | 85% | 6% | 20/20 |
| Comparative Example 1-6 | 24 | 3 | 2.43 | 0.25% | 79% | 0% | 3/20 |
| Comparative Example 1-7 | 61 | 3 | 2.43 | 0.25% | 95% | 0% | 4/20 |
| Comparative Example 1-8 | 40 | 40 | 2.43 | 3.29% | 89% | 2% | 20/20 |
| Comparative Example 1-9 | 40 | 45 | 2.43 | 3.70% | 87% | 2% | 20/20 |
| Comparative Example 1-10 | 24 | 16 | 2.43 | 1.32% | 80% | 0% | 20/20 |
| Comparative Example 1-11 | 3 | 3 | 2.43 | 0.25% | 62% | 0% | 2/20 |
| Comparative Example 1-12 | 2 | 3 | 2.43 | 0.25% | 60% | 0% | 2/20 |
| Example 1-1 | 40 | 16 | 2.43 | 1.32% | 95% | 0% | 20/20 |
| Example 1-2 | 25 | 16 | 2.43 | 1.32% | 94% | 0% | 20/20 |
| Example 1-3 | 30 | 16 | 2.43 | 1.32% | 94% | 0% | 20/20 |
| Example 1-4 | 35 | 16 | 2.43 | 1.32% | 95% | 0% | 20/20 |
| Example 1-5 | 45 | 16 | 2.43 | 1.32% | 96% | 0% | 20/20 |
| Example 1-6 | 50 | 16 | 2.43 | 1.32% | 96% | 0% | 20/20 |
| Example 1-7 | 60 | 16 | 2.43 | 1.32% | 96% | 0% | 20/20 |
| Example 1-8 | 40 | 4 | 2.43 | 0.33% | 96% | 0% | 16/20 |
| Example 1-9 | 40 | 8 | 2.43 | 0.66% | 96% | 0% | 17/20 |
| Example 1-10 | 40 | 12 | 2.43 | 0.99% | 96% | 0% | 19/20 |
| Example 1-11 | 40 | 22 | 2.43 | 1.81% | 94% | 0% | 20/20 |
| Example 1-12 | 40 | 30 | 2.43 | 2.47% | 95% | 0% | 20/20 |
| Example 1-13 | 55 | 40 | 2.43 | 3.29% | 88% | 2% | 20/20 |
| Example 1-14 | 55 | 50 | 2.43 | 4.12% | 89% | 3% | 20/20 |
| Example 1-15 | 55 | 52 | 2.43 | 4.28% | 85% | 5% | 20/20 |

It can be learned from Examples 1-1 to 1-15 in Table 1 that when T₁ > T₂, T₂ ≥ 4 µm, and 25 µm ≤ T₁ ≤ 60 µm, it is conducive to mitigating the risk of the weld mark 101 piercing the packaging pouch 10, mitigating the risk of the tab assembly 22 breaking or falling off due to force during handling and use, mitigating the problems of purple spots and capacity loss after cycling, and enhancing the drop performance of the secondary battery 100.

It can be learned from Examples 1-8 to 1-15 in Table 1 that as the value of 2T₂/T decreases, the thickness difference of the secondary battery 100 decreases, and the purple spot/lithium precipitation area decreases. When the value of 2T₂/T is less than 4.1%, slight purple spot/lithium precipitation occurs at the position of the second insulating member 50; and when the value of 2T₂/T is less than 1.8%, no purple spot/lithium precipitation occurs at the position of the second insulating member 50.

**Table 2 (Except for the parameters listed in Table 2, all other parameters of Examples 2-1 to 2-14 are the same as those of Example 1-1.)**

| | Length L₁ of first insulating member (mm) | Length L of weld mark (mm) | Width W₁ of first insulating member (mm) | Width W of weld mark (mm) | Cycling capacity retention rate |
|---|---|---|---|---|---|
| Example 1-1 | 5 | 1.1 | 15 | 6 | 95% |
| Example 2-1 | 1.1 | 1.1 | 15 | 6 | 79% |
| Example 2-2 | 1.2 | 1.1 | 15 | 6 | 85% |
| Example 2-3 | 1.6 | 1.1 | 15 | 6 | 88% |
| Example 2-4 | 2.4 | 1.1 | 15 | 6 | 92% |
| Example 2-5 | 3.6 | 1.1 | 15 | 6 | 93% |
| Example 2-6 | 6 | 1.1 | 15 | 6 | 96% |
| Example 2-7 | 7.3 | 1.1 | 15 | 6 | 96% |
| Example 2-8 | 7.5 | 1.1 | 15 | 6 | 96% |
| Example 2-9 | 5 | 1.1 | 8 | 6 | 80% |
| Example 2-10 | 5 | 1.1 | 9 | 6 | 86% |
| Example 2-11 | 5 | 1.1 | 11 | 6 | 88% |
| Example 2-12 | 5 | 1.1 | 16 | 6 | 95% |
| Example 2-13 | 5 | 1.1 | 18 | 6 | 96% |
| Example 2-14 | 5 | 1.1 | 19 | 6 | 96% |

It can be learned from Examples 1-1 and 2-1 to 2-8 in Table 2 that when L₁ > 6.7L, there is no significant improvement in capacity loss after cycling; and when 1.1L ≤ L₁ ≤ 6.7L, it is conducive to the first insulating member 40 covering the weld mark 101, mitigating the risk of short circuit due to the weld mark 101 piercing the packaging pouch 10, mitigating the problem of capacity loss after cycling, and saving costs.

It can be learned from Examples 1-1 and 2-3 to 2-6 in Table 2 that when 1.5L ≤ L₁ ≤ 5.4L, the problem of capacity loss after cycling is better mitigated.

It can be learned from Examples 2-9 to 2-14 in Table 2 that when W₁ > 3W, there is no significant improvement in capacity loss after cycling; and when 1.5W ≤ W₁ ≤ 3W, it is conducive to the first insulating member 40 covering the weld mark 101, mitigating the risk of short circuit due to the weld mark 101 piercing the packaging pouch 10, mitigating the problem of capacity loss after cycling, and helping to save costs.

It can be learned from Examples 2-10 to 2-12 in Table 2 that when 1.8W ≤ W₁ ≤ 2.7W, there is a significant improvement in the problem of capacity loss after cycling.

**Table 3 (Except for the parameters listed in Table 3, all other parameters of Examples 3-1 to 3-14 are the same as those of Example 1-1.)**

| | L₅ (mm) | L₆ (mm) | Pass rate of drop performance test |
|---|---|---|---|
| Example 1-1 | 5 | 10 | 20/20 |
| Example 3-1 | 2 | 10 | 9/20 |
| Example 3-2 | 3 | 10 | 16/20 |
| Example 3-3 | 8 | 10 | 20/20 |
| Example 3-4 | 9 | 10 | 20/20 |
| Example 3-5 | 5 | 2 | 7/20 |
| Example 3-6 | 5 | 3 | 14/20 |
| Example 3-7 | 5 | 5 | 15/20 |
| Example 3-8 | 5 | 7 | 18/20 |
| Example 3-9 | 5 | 9 | 20/20 |
| Example 3-10 | 5 | 11 | 20/20 |
| Example 3-11 | 5 | 13 | 20/20 |
| Example 3-12 | 5 | 14 | 20/20 |
| Example 3-13 | 2 | 2 | 1/20 |
| Example 3-14 | 9 | 14 | 20/20 |

It can be learned from Examples 1-1, 3-1 to 3-3, 3-5 to 3-11, and 3-13 in Table 3 that when 3 mm ≤ L₅ ≤ 8 mm and 3 mm ≤ L₆ ≤ 13 mm, it is conducive to fixing the main body portion 21 and the tab assembly 22, mitigating the risk of the tab assembly 22 breaking or falling off due to force during movement or use of the secondary battery 100, and enhancing the drop performance of the secondary battery 100.

It can be learned from Examples 3-4, 3-12, and 3-14 in Table 3 that L₅ greater than 8 mm tends to occupy space, causing energy density loss and cost loss, and L₆ greater than 13 mm tends to occupy space, causing cost loss, and occupies the space at the head of the packaging pouch 10, which easily affects the sealing of the packaging pouch 10.

Referring to FIG. 7, this application also provides an electronic apparatus 200 using the above secondary battery 100.

In one embodiment, the electronic apparatus 200 of this application may be, but is not limited to, a vehicle, a mobile phone, a portable device, a notebook computer, a ship, a spacecraft, an electric toy, an electric tool, or the like.

Those of ordinary skill in the art should appreciate that the foregoing embodiments are for description of this application only but not for limiting this application. Appropriate modifications and variations made to the foregoing embodiments without departing from the essential spirit and scope of this application all fall within the scope of this application.

## Claims

1. A secondary battery, comprising a packaging pouch, an electrode assembly, and an electrical connection member, wherein the electrode assembly is located in the packaging pouch, the electrode assembly comprises a main body portion and a tab assembly extending from the main body portion, the tab assembly comprises a plurality of tabs, and one end of the electrical connection member is located outside the packaging pouch, and another end is electrically connected to the tab assembly;
the tab assembly comprises a first portion and a second portion, wherein the first portion protrudes from the main body portion and is connected to the second portion, the second portion is bent toward the main body portion relative to the first portion, the second portion is welded to the electrical connection member to form a weld mark, and the second portion comprises a first surface facing away from the main body portion and a second surface facing toward the main body portion; and
the secondary battery further comprises a first insulating member and a second insulating member, wherein the first insulating member is provided on the first surface of the second portion and covers the weld mark, the second insulating member is located on one side in a thickness direction of the tab, the second insulating member extends from the first surface of the second portion through the first portion to the main body portion, a thickness of the first insulating member is T₁, a thickness of the second insulating member is T₂, T₁ > T₂, 25 µm ≤ T₁ ≤ 60 µm, and T₂ ≥ 4 µm.

2. The secondary battery according to claim 1, wherein a thickness of the electrode assembly is T, and 2T₂/T × 100% ≤ 4.1%.

3. The secondary battery according to claim 2, wherein 2T₂/T × 100% ≤ 1.8%.

4. The secondary battery according to claim 1 or 2, wherein 30µm ≤ T₁ ≤ 50 µm.

5. The secondary battery according to any one of claims 1 to 4, wherein the first insulating member and the second insulating member at least partially overlap on the first surface.

6. The secondary battery according to claim 5, wherein an overlapping region of the second insulating member with the first insulating member at least partially overlaps with the weld mark.

7. The secondary battery according to claim 5, wherein in an overlapping region of the first insulating member and the second insulating member, the second portion, the second insulating member, and the first insulating member are sequentially stacked.

8. The secondary battery according to claim 7, wherein along a stacking direction of the second insulating member and the first insulating member, a projection of the first insulating member is located within the second insulating member.

9. The secondary battery according to claim 7, wherein an area of the first insulating member is A₁, an overlapping area between the first insulating member and the second insulating member is A, and A ≥ 16.7% A₁.

10. The secondary battery according to any one of claims 1 to 9, wherein along a width direction of the main body portion of the electrode assembly, a width of the first insulating member is W₁, and a width of the weld mark is W; and along an extending direction of the tab, a length of the first insulating member is L₁, and a length of the weld mark is L; wherein 1.5W ≤ W₁ ≤ 3W, and 1.1L ≤ L₁ ≤ 6.7L.

11. The secondary battery according to claim 10, wherein 1.8W ≤ W₁ ≤ 2.7W, and 1.5L ≤ L₁ ≤ 5.4L.

12. The secondary battery according to any one of claims 1 to 11, wherein along an extending direction of the second insulating member, an overlapping length of the second insulating member with the main body portion is L₅, an overlapping length of the second insulating member with the tab and the electrical connection member is L₆, 3 mm ≤ L₅ ≤ 8 mm, and 3 mm ≤ L₆ ≤ 13 mm.

13. The secondary battery according to any one of claims 1 to 12, wherein the secondary battery further comprises an electrolyte sealed in the packaging pouch, and the peel strength between the first insulating member and the weld mark is greater than 0.26 N/mm.

14. The secondary battery according to any one of claims 1 to 13, wherein the secondary battery further comprises the electrolyte sealed in the packaging pouch, and the peel strength between the second insulating member and the tab is greater than 0.08 N/mm.

15. The secondary battery according to any one of claims 1 to 14, wherein the secondary battery further comprises a third insulating member, the third insulating member is located on a side of the tab facing away from the second insulating member, the third insulating member sequentially passes from the electrical connection member through the second surface of the second portion and the first portion and extends to the main body portion, and a thickness of the third insulating member is T₃; and the secondary battery further satisfies: T₁ > T₃.

16. The secondary battery according to claim 15, wherein the thickness of the electrode assembly is T, and 2T₃/T × 100% ≤ 4.1%.

17. The secondary battery according to claim 16, wherein 2T₃/T × 100% ≤ 1.8%.

18. The secondary battery according to claim 15, wherein along an extending direction of the third insulating member, an overlapping length of the third insulating member with the main body portion is L₇, an overlapping length of the third insulating member with the tab and the electrical connection member is L₈, 3 mm ≤ L₇ ≤ 8 mm, and 7 mm ≤ L₈ ≤ 13 mm.

19. The secondary battery according to claim 15, wherein the secondary battery further comprises the electrolyte sealed in the packaging pouch, and the peel strength between the third insulating member and the tab is greater than 0.08 N/mm.

20. The secondary battery according to claim 15, wherein the first insulating member, the second insulating member, and the third insulating member each comprises a substrate layer and an adhesive layer, the adhesive layer being connected to the substrate layer;
the substrate layer comprises one or a combination of several of polyethylene terephthalate, polyimide, polyester film, polyethylene film, non-woven fabric, and foam; and
the adhesive layer comprises one or a combination of several of an acrylic system, a rubber system, styrene-isoprene-styrene, isooctyl acrylate, octyl methacrylate, isooctyl methacrylate, isoprene, styrene, butyl acrylate, polyacrylic acid, polyacrylate salt, polyacrylonitrile, polyvinylpyrrolidone, polyvinyl acetate, and polymethyl methacrylate.

21. An electronic apparatus, comprising the secondary battery according to any one of claims 1 to 20.
